# FASCICULE DE BREVET EUROPEEN

(11) **EP 2 221 751 B1**
(45) Date de publication et mention de la délivrance du brevet: **18.04.2018**
(21) Numéro de dépôt: 09177898.5
(22) Date de dépôt: 03.12.2009
(51) Int. Cl.: G06K 19/077

(54) **Support pour carte à microcircuit, carte à microcircuit comprenant un tel support**
Träger für Mikrochipkarte und einen solchen Träger umfassende Mikrochipkarte
Support for a chip card, chip card comprising such a support

(30) Priorité: 20.02.2009 FR 0951109
(43) Date de publication de la demande: 25.08.2010
(73) Titulaire: IDEMIA France, 92700 Colombes (FR)
(72) Inventeur: Garnier, Laurent, 35680 Moulins (FR)
(74) Mandataire: Delumeau, François Guy

(56) Documents cités:
- EP-A2- 0 935 215
- WO-A2-2008/129526
- DE-A1- 19 731 737
- FR-A- 2 774 617

## Description

La présente invention concerne un support pour carte à microcircuit et une carte à microcircuit comprenant un tel support.

Elle s'applique plus particulièrement mais non spécifiquement au domaine des cartes à puce dites « dual interface » car comportant deux interfaces : une première interface utilisant des contacts électriques externes pour établir une communication dite « avec contact » et une deuxième interface utilisant une antenne magnétique de communication en champ proche, par exemple formée d'un enroulement d'une pluralité de spires électriquement conductrices, incorporée dans la carte, pour établir une communication dite «sans contact ».

Habituellement, le support comprend un corps dans lequel est incorporée une antenne. Par ailleurs, afin de raccorder l'antenne et le microcircuit, le support comprend des pastilles métalliques de raccordement électrique.

Un tel support est connu de l'état de la technique, notamment du document WO 2008/129526.

Dans ce document, le corps du support est formé par une pluralité de couches laminées entre elles. Avant lamination des couches entre elles, une des couches du support est perforée de manière à former deux trous à l'intérieur desquels les pastilles sont positionnées. Un fil d'antenne est ensuite incrusté dans cette couche, chaque extrémité de cette antenne étant raccordée respectivement à une des pastilles. Puis, cette couche est intercalée entre au moins deux couches externes, les couches étant ensuite laminées pour obtenir le support. A l'issue de cette étape de lamination, une cavité est usinée dans le support de manière à former un logement pour le microcircuit.

La fabrication d'un tel support s'avère être relativement délicate, notamment lors de l'étape de l'usinage de la cavité au cours de laquelle les pastilles sont partiellement mises à nues pour permettre le raccordement électrique de l'antenne au microcircuit.

En effet, lors de la formation de la cavité, un outil d'usinage, en venant en contact avec la pastille, peut provoquer une rotation intempestive de la pastille. De tels déplacements, même de faibles amplitudes, peuvent être à l'origine de faux-contacts et de courts-circuits entre les composants du microcircuit et l'antenne.

L'invention a notamment pour but de remédier à cet inconvénient de manière simple et économique.

A cet effet, l'invention a pour objet un support pour carte à microcircuit, comprenant un corps formé dans une masse de matériau dans laquelle est incorporée au moins une pastille métallique de contact, la pastille comprenant une première partie noyée dans la masse et une deuxième partie susceptible d'être mise à nue, **caractérisé en ce** la première partie prend ancrage dans la masse pour bloquer la rotation de la pastille autour d'un axe sensiblement orthogonal au support dans au moins un sens de rotation prédéfini. Du fait que la première partie est agencée pour bloquer la rotation de la pastille, la deuxième partie, même lors de sa mise à nue, reste immobile. Ainsi, la première partie prend ancrage dans la masse de matériau à l'intérieur de laquelle elle est noyée ce qui bloque tout mouvement rotatif de la pastille dans le sens prédéfini. Ainsi, même en cas de sollicitation de la pastille en rotation par exemple par un outil d'usinage de la cavité, la pastille est retenue dans sa position initiale grâce à l'agencement spécifique de la première partie de la pastille.

Un support selon l'invention peut en outre comporter l'une ou plusieurs des caractéristiques selon lesquelles :
- le contour de la première partie de la pastille est muni d'un prolongement latéral apte à venir en butée à l'intérieur de la masse pour bloquer la rotation de la pastille dans le sens de rotation prédéfini ;
- la première partie est agencée dans le support pour bloquer la rotation de la pastille dans deux sens de rotation opposés ;
- le contour de la première partie de la pastille est muni de deux prolongements latéraux aptes à venir en butée à l'intérieur de la masse pour bloquer la rotation de la pastille dans les deux sens de rotation prédéfinis ;
- le support comprend une autre pastille, les deux pastilles s'étendant dans un même plan du support ;
- la pastille a une forme générale en T, la jambe du T comprenant la deuxième partie et la barre du T, perpendiculaire à la jambe, formant au moins partiellement la première partie ;
- le corps comprend au moins une couche interne munie d'un logement de réception d'au moins ladite pastille et deux couches externes entre lesquelles est intercalée la couche interne et dans lequel les trois couches sont laminées ;
- le support comprend une antenne incorporée dans le corps et dans lequel la première partie délimite une zone de raccordement de l'antenne et la deuxième partie, une fois mise à nue, délimite une zone de raccordement d'un microcircuit ;
- la première partie a une forme générale oblongue pour le raccordement d'une antenne, l'antenne s'étendant selon la direction longitudinale de la première partie.

L'invention concerne également une carte à microcircuit, comprenant un microcircuit et un support de carte portant le microcircuit muni d'une cavité de réception du microcircuit, **caractérisé en ce que**, le support de carte étant tel que décrit ci-dessus, la cavité est formée dans le support de manière à mettre à nu la deuxième partie de la pastille.

D'autres caractéristiques et avantages de l'invention apparaîtront à la lumière de la description qui suit, faite en référence aux dessins annexés dans lesquels :
- la figure 1 est une vue en coupe d'une carte à microcircuit comprenant un support de carte selon l'invention ;
- la figure 2 est une vue en perspective d'une couche du support de la figure 1 portant une antenne et des pastilles de raccordement électrique de l'antenne au microcircuit dans laquelle une zone prédéfinie d'usinage d'une cavité est dessinée ;

- la figure 3 représente en détail une pastille du support des figures 1 et 2 ;
- la figure 4 est une vue en coupe du support selon l'invention comprenant la couche de la figure 2 ;
- la figure 5 illustre de façon schématique une étape de formation d'une cavité dans le support de la figure 4 ;
- la figure 6 représente le support de la figure 4 à l'issue de l'étape d'usinage illustrée par la figure 5.

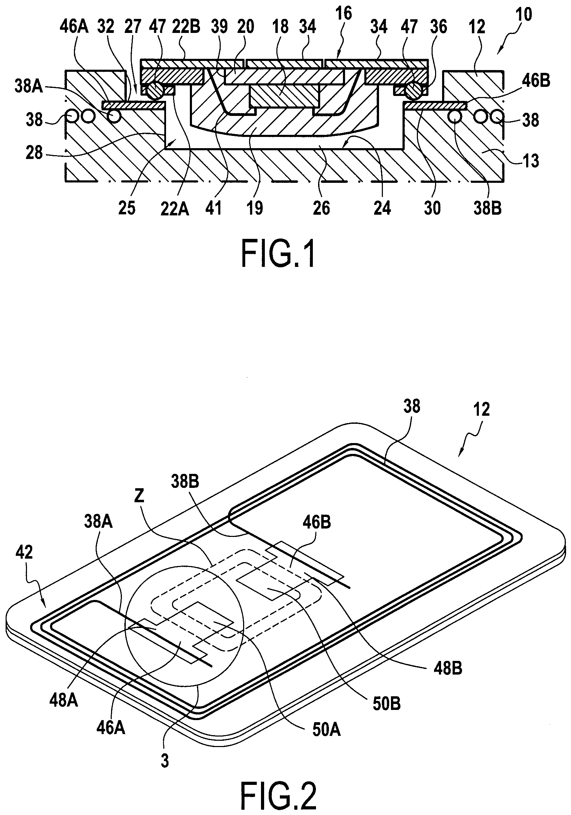

On a représenté sur **la** **figure 1** une carte à microcircuit désignée par la référence générale 10.

Cette carte à microcircuit 10 comprend un support 12 délimitant le corps 13 de la carte 10 formé dans une masse de matériau, comprenant essentiellement une matière plastique.

Dans cet exemple, la carte 10 comprend un module 16 de microcircuit. Ce module 16 comprend un microcircuit 18 et un support de module 20 délimitant deux faces opposées dite interne 22A et externe 22B, la face interne 22A portant le microcircuit 18 (désigné également par puce électronique).

En outre, dans cet exemple, comme cela est illustré par **la** **figure 1**, le support de carte 12 comprend une cavité 24 de logement du module 16 de microcircuit.

Plus précisément, la cavité 24 comprend une zone centrale profonde 25 munie d'un fond 26 pour le logement du microcircuit 18 et une zone périphérique 27 surélevée par rapport à la zone centrale 25 délimitant un gradin 30 avec le fond 26. Cette zone périphérique 27 comprend une surface 32 d'appui surélevée par rapport au fond 26 de la cavité 24 sur laquelle reposent les bords du support de module 20.

Une telle cavité 24 est généralement obtenue par usinage, typiquement par fraisage ou lamage en deux opérations :
- un grand lamage pour former la zone périphérique 27 correspondant à la profondeur du gradin 30,
- un petit lamage pour former la zone centrale 25 plus profonde.

Dans cet exemple, la face externe 22B comprend une plage métallique 34 de contacts externes permettant d'établir une communication dite de contact entre la puce 18 du module 16 et un lecteur de carte externe (non représenté) et la face interne 22A porte une plage métallique 36 de contacts internes du microcircuit 18 à des éléments électroniques incorporés dans le support 12.

Le microcircuit 18 est par exemple encapsulé dans une calotte 19 de résine polymère et est ainsi rapporté par collage dans la zone centrale 25 de la cavité 24. En outre, comme cela est illustré par **la** **figure 1**, cette puce 18 du module 16 est raccordée de façon filaire aux contacts de la plage externe 34 par l'intermédiaire de vias 39 ménagés dans le support 12. Ainsi, des fils électriquement conducteurs 41 relient le microcircuit 18 et la plage externe 34 en traversant les perçages 39 (ou vias) prévus à cet effet. Par ailleurs, le microcircuit 18 est raccordé par des pistes conductrices à la plage interne 36 de contacts.

Dans une variante non illustrée, la puce 18 peut être assemblée selon un autre procédé d'assemblage, tel que par exemple, un procédé de report de puce de type « monté-retourné» (de l'anglais « flip-chip »), c'est-à-dire que tous les contacts de la puce, sous forme de billes ou de bosses métalliques, sont situés sur une seule face. La puce est montée retournée lors du montage de manière à ce que les billes ou les bosses soient soudées aux conducteurs appropriés sur le support 12.

Dans l'exemple décrit, la carte à microcircuit 10 est de type duale et comprend à cet effet une antenne 38 (**figure 2**) incorporée dans le support 12. L'antenne 38 est ainsi formée par un enroulement de spires de forme générale rectangulaire s'étendant le long de la périphérie du support de carte 12 et comprend deux extrémités 38A, 38B.

Afin de raccorder électriquement le module 16 et l'antenne 38, le support 12 comprend également au moins une pastille 46 de contact, de préférence, des première 46A et deuxième 46B pastilles de contact, destinées à raccorder électriquement l'antenne 38 au microcircuit 18.

Par la suite, on notera par les références numériques les éléments associés à la première pastille 46A avec un indice A et les éléments associés à la deuxième pastille 46B avec un indice B.

Dans cet exemple, chaque pastille 46A, 46B est destinée à raccorder respectivement une des extrémités 38A, 38B de l'antenne 38 au microcircuit 18. Dans l'exemple décrit, le microcircuit 18 n'est pas en contact direct avec les pastilles 46A, 46B mais est raccordé électriquement aux pastilles 46A, 46B par l'intermédiaire des contacts de la plage métallique interne 36, cette plage métallique interne 36 étant raccordée elle-même aux pastilles électriques 46A, 46B par une colle électriquement isolante dans laquelle sont incorporées des particules électriquement conductrices 47.

En outre, le support 12 est formé par lamination d'une pluralité de couches superposées dans lesquelles sont insérés les différents éléments électroniques de la carte 10 tels que l'antenne 38, le module 16 et les pastilles de contact 46.

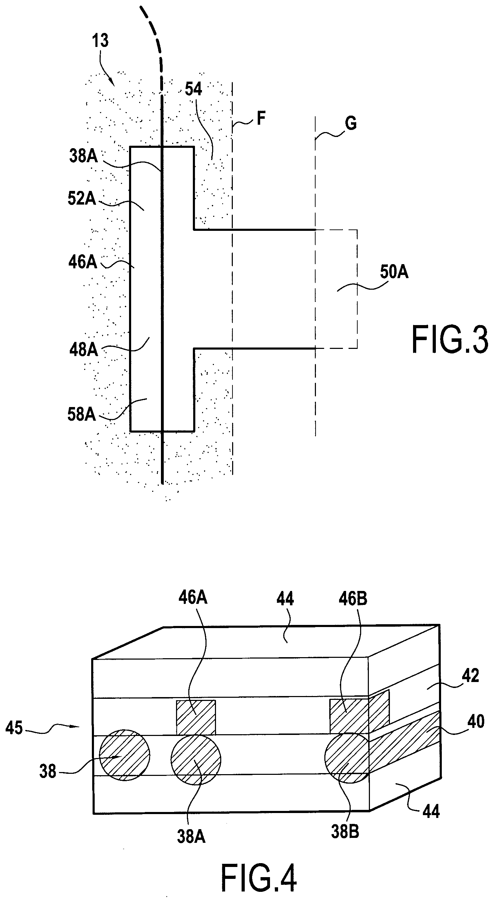

En référence à **la** **figure 4**, le support 12 comprend au moins une première couche interne 40 portant l'antenne 38 et une deuxième couche interne 42 portant les pastilles 46. Ces couches sont réalisées dans un matériau isolant tel qu'un matériau plastique, époxy, etc. En outre, ces première 40 et deuxième 42 couches sont intercalées entre deux couches externes 44, dites de compensation, ayant pour fonction de compenser les éventuels défauts de surface des couches internes 40 et 42.

De préférence, comme cela est illustré sur les figures, les deux pastilles 46A, 46B s'étendent sensiblement dans un même plan du support 12 défini par la couche interne 42.

L'antenne 38 est incorporée dans la couche centrale 42 selon une technique classique (sérigraphie, gravure, insertion filaire, ultra-son, etc.). Par souci de simplification, on a représenté sur **la** **figure 4** seulement les quatre couches centrales 40, 42 et 44 de la pile résultant de cette superposition. Bien entendu, d'autres couches non représentées peuvent être rajoutées dans la pile.

Dans la suite de la description, on décrira en détail la première pastille 46A représentée sur **la** **figure 3**. Bien entendu, la description détaillée de la première pastille 46A s'applique également à la deuxième pastille 46B représentée sur les figures.

Plus particulièrement, la pastille 46A comprend une première partie 48A de raccordement de l'antenne 38 noyée dans la masse 13 formant le corps du support 12 et une deuxième partie 50A susceptible d'être mise à nue, notamment lors de l'usinage de la cavité 24 dans le support 12.

La délimitation des parties 48A, 50A entre elles de la pastille 12 est prédéfinie. Ainsi, sur la **figure 2**, on a représenté la couche centrale 42 portant l'antenne 38 et la pastille 46 ainsi qu'une trace en pointillé délimitant une zone Z d'occupation prédéfinie de la cavité 12 dans la couche 42. On voit ainsi que la première partie 48A de la pastilles 46A est destinée à être noyée dans la masse 13 du corps du support 12 alors que la deuxième partie 50A est destinée à être mise à nue par la cavité 24. Le fait de dénuder la deuxième partie 50A permet notamment de fournir une plage de raccordement électrique aux contacts métalliques internes 36.

On a représenté en détail la première pastille 46A sur **la** **figure 3**. La ligne F qui sépare les première 48A et deuxième 50A parties correspond à l'emplacement prédéfini du contour de la cavité 24.

Sur cette figure, on a également représenté de façon schématique une ligne G de délimitation des emplacements des zones plus profonde 25 et périphérique 27 de la cavité 24. Au-delà de la ligne G, la zone d'extrémité de la pastille 46A représentée en pointillé est destinée à être découpée lors de la formation de la zone plus profonde 25 de la cavité 24.

De préférence, la première partie 48A délimite une zone de raccordement de l'antenne 38 et la deuxième partie 50A une fois mise à nue, délimite une zone de raccordement du microcircuit 18, ou plus précisément de raccordement des contacts de la plage interne 36 raccordés électriquement au microcircuit 18 par l'intermédiaire, par exemple, de pistes imprimées sur le support de module 20.

Plus particulièrement, la première partie 48A est agencée dans le support 12 pour bloquer la rotation de la pastille 46A autour d'un axe X orthogonal au support 12 dans au moins un sens de rotation prédéfini S1.

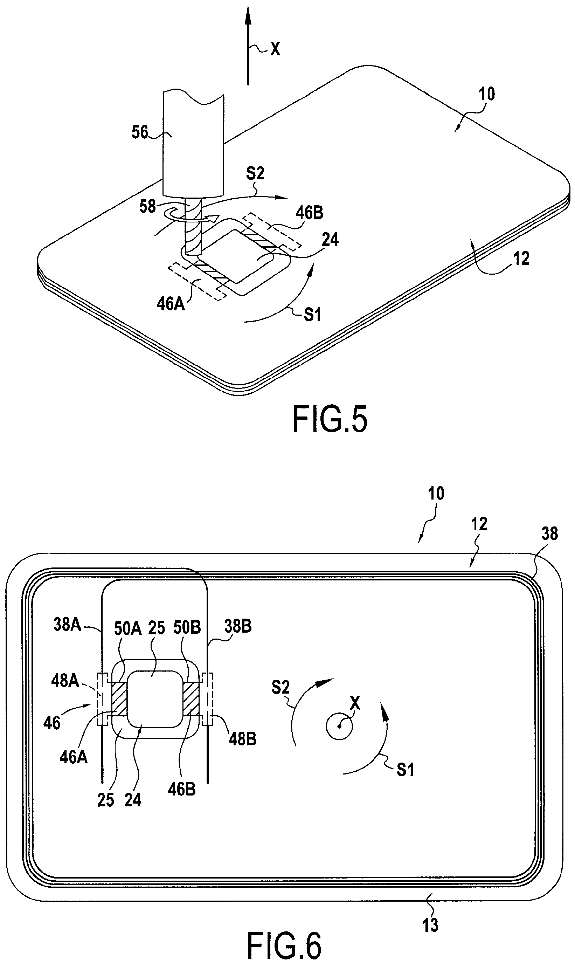

La pastille 46A est munie d'au moins un premier prolongement 52A latéral apte à venir en butée à l'intérieur de la masse 13 du support 12 pour bloquer la rotation de la pastille 46A dans le sens de rotation prédéfini S1. Ainsi, la masse 13 forme un bras 54 s'étendant entre le prolongement latéral 52A et la périphérie de la cavité 24 formant une masse d'ancrage pour la pastille 46A lorsque celle-ci est sollicitée en rotation dans le sens prédéfini S1. Par exemple, le sens prédéfini S1 est le sens de rotation d'un outil de fraisage 56 tel que représenté sur **la** **figure 5**.

De préférence, la première partie 48A est agencée dans le support 12 pour bloquer la rotation de la pastille 46A dans deux sens de rotation opposés S1 et S2.

Dans ce cas, le contour de la première partie 48A de la pastille 46A est muni d'un deuxième prolongement latéral 58A apte à venir en butée à l'intérieur de la masse 12 pour bloquer la rotation de la pastille 46A dans les deux sens de rotation prédéfinis S1 et S2.

De préférence, la première partie 48A a une forme générale oblongue pour le raccordement de l'antenne 38, de manière à ce que l'antenne 38 s'étende selon la direction longitudinale de la première partie 48A.

Ainsi, la pastille 46A a de préférence une forme générale en T, la jambe du T comprenant la deuxième partie 50A et la barre du T, perpendiculaire à la jambe, formant au moins partiellement la première partie 48A.

On va maintenant décrire les principaux aspects d'un support 12 selon l'invention.

Tout d'abord, deux trous de forme générale en T sont réalisés dans un substrat formant la deuxième couche interne 42. Puis, les pastilles de contact 46A, 46B en forme générale de T sont ensuite positionnées dans les trous correspondants.

L'antenne 38 est par la suite incorporée dans un substrat formant la première couche interne 40 et chacune des extrémités 38A, 38B de cette dernière sont raccordées à leurs pastilles respectives 46A, 46B.

De préférence, chaque extrémité 38A, 38B de l'antenne 38 est raccordée de manière à s'étendre longitudinalement le long de la barre du T de chacune des deux pastilles 46A, 46B. Ceci permet notamment de faciliter le positionnement relatif de la pastille 46A, 46B et de l'extrémité de l'antenne 38 dans la longueur.

Les couches internes 40 et 42 sont ensuite intercalées entre les deux couches externes 44 en matière plastique et éventuellement d'autres couches externes pour former une pile qui est ensuite soumise à un cycle de lamination.

A l'issue du cycle de lamination, on obtient un corps de carte dans lequel sont noyées les deux pastilles 46A, 46B et l'antenne 38. De préférence, le corps de carte a une épaisseur sensiblement de l'ordre de 760 microns, suivant la norme ISO 7816 des cartes à microcircuit.

On forme alors la cavité 24 dans le corps 13 du support de carte 12 à l'emplacement prédéfini.

A cet effet, un outil 56 de fraisage adapté usine la cavité 24, par exemple par rotation d'une fraise 58 dans un sens prédéfini S1. L'outil 56 forme d'abord le petit lamage 25. Au cours de cette étape, les pastilles 46 sont partiellement découpées à leur extrémité respective. Puis, l'outil 56 forme le grand lamage 57 et met à nu au moins une partie de la jambe du T des pastilles 46A, 46B. Cette partie correspond à la deuxième partie 50A, 50B.

Au cours de ces étapes d'usinage, l'outil 56 vient solliciter chaque pastille 46 dans un mouvement rotatif dans le sens prédéfini S1 correspondant au sens de rotation de la fraise 58. Grâce à la forme particulière de chaque pastille 46, cette dernière reste immobile malgré cette sollicitation.

En effet, la première partie 48 de chaque pastille 46 permet de bloquer tout mouvement de rotation dans ce sens prédéfini S1 et dans cet exemple dans les deux sens S1 et S2. Ainsi, les prolongements latéraux 52A, 58A de la première partie 48 permettent un ancrage de la pastille 46 dans la masse 13 ce qui permet de retenir cette dernière dans sa position initiale.

On obtient finalement le support 12 tel qu'illustré sur **la** **figure 6** dans laquelle on a représenté par transparence sur cette figure, l'antenne 38 et les pastilles 46.

Un module 16 est ensuite rapporté dans la cavité 24 de manière à ce que les bords de la face interne 22A du support de module 20 reposent sur la surface d'appui 32 et de manière à ce que les contacts internes 36 de la plage interne du module 16 coïncident avec la deuxième partie 50 de chacune des pastilles 46.

Grâce à l'invention, tout déplacement, notamment rotatif, de la pastille est bloqué et ce de manière simple et économique.

Il est bien entendu que les modes de réalisation qui viennent d'être décrits ne présentent aucun caractère limitatif et qu'ils pourront recevoir toute modification désirable sans sortir pour cela du cadre de l'invention.

En particulier, il serait conforme à l'invention de remplacer la forme en T des pastilles par une forme en r (gamma majuscule) de manière à ce que le couple de pastilles 46A, 46B ne bloque la rotation que dans un seul et même sens.

## Revendications

1. Support (12) pour carte à microcircuit (10), comprenant un corps (13) formé dans une masse de matériau dans laquelle est incorporée au moins une pastille métallique (46, 46A, 46B) de contact, la pastille (46, 46A, 46B) comprenant une première partie (48A, 48B) noyée dans la masse (13) et une deuxième partie (50A, 50B) susceptible d'être mise à nue, **caractérisé en ce que** la première partie (48A, 48B) prend ancrage dans la masse pour bloquer la rotation de la pastille (46, 46A, 46B) autour d'un axe sensiblement orthogonal (X) au support (12) dans au moins un sens de rotation prédéfini (S1),
le contour de la première partie (48A, 48B) de la pastille (46, 46A, 46B) étant muni d'un prolongement latéral apte à venir en butée à l'intérieur de la masse pour bloquer la rotation de la pastille (46, 46A, 46B) dans le sens de rotation prédéfini (S1).

2. Support (12) selon la revendication précédente, dans lequel la première partie (48A, 48B) est agencée dans le support (12) pour bloquer la rotation de la pastille (46, 46A, 46B) dans deux sens de rotation opposés (S1, S2).

3. Support (12) selon la revendication précédente, dans lequel le contour de la première partie (48A, 48B) de la pastille (46, 46A, 46B) est muni de deux prolongements latéraux aptes à venir en butée à l'intérieur de la masse (13) pour bloquer la rotation de la pastille (46, 46A, 46B) dans les deux sens de rotation prédéfinis (S1, S2).

4. Support (12) selon l'une quelconque des revendications précédentes, comprenant une autre pastille (46, 46A, 46B), les deux pastilles (46, 46A, 46B) s'étendant sensiblement dans un même plan du support (12).

5. Support (12) selon l'une quelconque des revendications précédentes, dans lequel la pastille (46, 46A, 46B) a une forme générale en T, la jambe du T comprenant la deuxième partie (50A, 50B) et la barre du T, perpendiculaire à la jambe, formant au moins partiellement la première partie (48A, 48B).

6. Support (12) selon l'une quelconque des revendications précédentes, dans lequel le corps (13) est formé par lamination d'une pile de couches, une des couches incorporant au moins la pastille (46, 46A, 46B).

7. Support (12) selon l'une quelconque des revendications précédentes, comprenant une antenne (38) incorporée dans le corps et dans lequel la première partie (48A, 48B) délimite une zone de raccordement de l'antenne (38) et la deuxième partie (50A, 50B), une fois mise à nue, délimite une zone de raccordement d'un microcircuit (18).

8. Support (12) selon l'une quelconque des revendications précédentes, dans lequel la première partie (48A, 48B) a une forme générale oblongue pour le raccordement d'une antenne (38) à la pastille (46A, 46B) selon la direction longitudinale de la première partie (48A, 48B).

9. Carte (10) à microcircuit, comprenant un microcircuit (18) et un support (12) de carte portant le microcircuit (18) muni d'une cavité (24) de réception du microcircuit (18), **caractérisé en ce que**, le support de carte (12) étant selon l'une quelconque des revendications précédentes, la cavité (24) est formée dans le support (12) de manière à mettre à nu la deuxième partie (50A, 50B) de la pastille (46A, 46B).

## Patentansprüche

1. Träger (12) für Mikroschaltungskarte (10), umfassend einen Körper (13), der aus einer Materialmasse gebildet ist, in die mindestens ein Metallkontaktplättchen (46, 46A, 46B) eingebettet ist, wobei das Plättchen (46, 46A, 46B) einen ersten Teil (48A, 48B), der in der Masse eingelassen ist, und einen zweiten Teil (50A, 50B) aufweist, der freigelegt werden kann, **dadurch gekennzeichnet, dass** der erste Teil (48A, 48B) in der Masse verankert ist, um die Drehung des Plättchens (46, 46A, 46B) um eine Achse, die im Wesentlichen orthogonal (X) zu dem Träger (12) ist, in mindestens eine vorgegebene Drehrichtung (S1) zu blockieren,
wobei die Kontur des ersten Teils (48A, 48B) des Plättchens (46, 46A, 46B) mit einer seitlichen Verlängerung versehen ist, die geeignet ist, im Inneren der Masse in Anschlag zu kommen, um die Drehung des Plättchens (46, 46A, 46B) in die vorgegebene Drehrichtung (S1) zu blockieren.

2. Träger (12) nach dem vorhergehenden Anspruch, wobei der erste Teil (48A, 48B) in dem Träger (12) angeordnet ist, um die Drehung des Plättchens (46, 46A, 46B) in zwei entgegengesetzte Drehrichtung (S1, S2) zu blockieren.

3. Träger (12) nach dem vorhergehenden Anspruch, wobei die Kontur des ersten Teils (48A, 48B) des Plättchens (46, 46A, 46B) mit zwei seitlichen Verlängerungen versehen ist, die geeignet sind, im Inneren der Masse (13) in Anschlag zu kommen, um die Drehung des Plättchens (46, 46A, 46B) in die zwei vorgegebenen Drehrichtungen (S1, S2) zu blockieren.

4. Träger (12) nach einem der vorhergehenden Ansprüche, umfassend ein anderes Plättchen (46, 46A, 46B), wobei sich die zwei Plättchen (46, 46A, 46B) im Wesentlichen in einer gleichen Ebene des Trägers (12) erstrecken.

5. Träger (12) nach einem der vorhergehenden Ansprüche, wobei das Plättchen (46, 46A, 46B) eine allgemein T-förmige Form aufweist, wobei der Stamm des T den zweiten Teil (50A, 50B) aufweist und der Deckstrich des T, der senkrecht zu dem Stamm ist, mindestens teilweise den ersten Teil (48A, 48B) bildet.

6. Träger (12) nach einem der vorhergehenden Ansprüche, wobei der Körper (13) durch Laminieren von einem Stapel von Schichten gebildet ist, wobei in einer der Schichten mindestens das Plättchen (46, 46A, 46B) eingebettet ist.

7. Träger (12) nach einem der vorhergehenden Ansprüche, umfassend eine Antenne (38), die in dem Körper eingebettet ist, und wobei der erste Teil (48A, 48B) einen Anschlussbereich der Antenne (38) und der zweite Teil (50A, 50B), nachdem er freigelegt ist, einen Anschlussbereich einer Mikroschaltung (18) begrenzt.

8. Träger (12) nach einem der vorhergehenden Ansprüche, wobei der erste Teil (48A, 48B) eine allgemein längliche Form für das Anschließen einer Antenne (38) an das Plättchen (46A, 46B) entlang der Längsrichtung des ersten Teils (48A, 48B) aufweist.

9. Mikroschaltungskarte (10), umfassend eine Mikroschaltung (18) und einen Kartenträger (12), der die Mikroschaltung (18) trägt, der mit einem Hohlraum (24) zum Aufnehmen der Mikroschaltung(18) versehen ist, **dadurch gekennzeichnet, dass**, wobei der Kartenträger (12) nach einem der vorhergehenden Ansprüche ist, der Hohlraum (24) in dem Träger (12) derart gebildet ist, um den zweiten Teil (50A, 50B) des Plättchens (46A, 46B) freizulegen.

## Claims

1. A carrier (12) for a microcircuit card (10), comprising a body (13) formed in a mass of material in which at least one metal pad (46, 46A, 46B) is embedded, the pad (46, 46A, 46B) comprising a first part (48A, 48B) encapsulated in the mass (13) and a second part (50A, 50B) able to be exposed, **characterized in that** the first part (48A, 48B) is anchored in the mass to block the rotation of the pad (46, 46A, 46B) around an axis (X) substantially orthogonal to the carrier (12) in at least one predefined rotation direction (S1),
the edge of the first part (48A, 48B) of the pad (46, 46A, 46B) being provided with a lateral extension able to abut inside the mass to block the rotation of the pad (46, 46A, 46B) in the predefined rotation direction (S1).

2. The carrier (12) according to the preceding claim, wherein the first part (48A, 48B) is arranged in the carrier (12) to block the rotation of the pad (46, 46A, 46B) in both opposite rotation directions (S1, S2).

3. The carrier (12) according to the preceding claim, wherein the edge of the first part (48A, 48B) of the pad (46, 46A, 46B) is provided with two lateral extensions able to abut inside the mass (13) to block the rotation of the pad (46, 46A, 46B) in both predefined rotation directions (S1, S2).

4. The carrier (12) according to any one of the preceding claims, comprising another pad (46, 46A, 46B), the two pads (46, 46A, 46B) extending substantially in a same plane of the carrier (12).

5. The carrier (12) according to any one of the preceding claims, wherein the pad (46, 46A, 46B) is generally T-shaped, the leg of the T comprising the second part (50A, 50B) and the bar of the T, perpendicular to the leg, forming at least partially the first part (48A, 48B).

6. The carrier (12) according to any one of the preceding claims, wherein the body (13) is formed by laminating a stack of layers, one of the layers incorporating at least the pad (46, 46A, 46B).

7. The carrier (12) according to any one of the preceding claims, comprising an antenna (38) incorporated into the body and in which the first part (48A, 48B) defines a connecting zone of the antenna (38) and the second part (50A, 50B), once exposed, defines a connecting zone of a microcircuit (18).

8. The carrier (12) according to any one of the preceding claims, wherein the first part (48A, 48B) has an oblong general shape for connecting an antenna (38) to the pad (46A, 46B) along the longitudinal direction of the first part (48A, 48B).

9. A microcircuit card (10), comprising a microcircuit (18) and a card carrier (12) bearing the microcircuit (18) provided with a cavity (24) for receiving the microcircuit (18), **characterized in that**, the card carrier (12) being according to any one of the preceding claims, the cavity (24) is formed in the carrier (12) so as to expose the second part (50A, 50B) of the pad (46A, 46B).
